# EUROPÄISCHE PATENTANMELDUNG

(11) **EP 3 809 102 A1**
(43) Veröffentlichungstag der Anmeldung: **21.04.2021**
(21) Anmeldenummer: 20195232.2
(22) Anmeldetag: 09.09.2020
(51) Int. Cl.: G01F 23/296

(54) **ANORDNUNG UND VERFAHREN ZUM FESTSTELLEN EINES MINDESTFÜLLSTANDS EINES FLUIDS IN EINEM FLUIDBEHÄLTER**

(30) Priorität: 17.10.2019 DE 102019216039
(71) Anmelder: Vitesco Technologies Germany GmbH, 30165 Hannover (DE)
(72) Erfinder: Pfeiffer, Karl-Friedrich - c/o Continental Automotive GmbH, 81737 München (DE); Jäger, Wighard - c/o Continental Automotive GmbH, 81737 München (DE)
(74) Vertreter: Waldmann, Georg Alexander

(57) **Zusammenfassung**

Die vorliegende Erfindung betrifft eine Anordnung (100) und ein Verfahren zum Feststellen eines Mindestfüllstands eines Fluids (F). Die Anordnung (100) weist einen Fluidbehälter (110), einen an einer Außenseite einer Seitenwand (112) des Fluidbehälters (110) unter einem vorbestimmten Abstand (A) zum Fluidbehälterboden (116) angebrachten Ultraschallwandler (120), der dazu ausgebildet ist, ein Ultraschallsignal (122) durch den ersten Seitenwandabschnitt (112) ins Innere des Fluidbehälters (110) auszusenden, ein im Inneren des Fluidbehälters (110) angeordnetes Reflexionselement (130), das dazu ausgebildet ist, das vom Ultraschallwandler (120) ausgesendete Ultraschallsignal (122) zurück zum Ultraschallwandler (120) zu reflektieren, und eine Steuervorrichtung zum Ansteuern des Ultraschallwandlers (120) auf. Die Steuervorrichtung stellt einen Fluidfüllstand (102) größer oder gleich dem Mindestfüllstand, wenn das empfangene Ultraschallsignal (122) am Reflexionselement (130) reflektiert ist, und einen Fluidfüllstand kleiner als der Mindestfüllstand fest, wenn das vom empfangene Ultraschallsignal (122) ein von der Innenwand des ersten Seitenwandabschnitts (112) reflektiertes Ultraschallsignal (122) ist.

## Beschreibung

Die vorliegende Erfindung betrifft eine Anordnung und ein Verfahren zum Feststellen bzw. zur Überwachung eines Mindestfüllstands eines Fluids in einem Fluidbehälter mit einem Ultraschallwandler, der im Wesentlichen an einer auf der Höhe des zu überwachenden Mindestfüllstands liegenden Messstelle an der Außenseite der Fluidbehälterwand angebracht ist.

Anordnungen mit Ultraschallwandlern kommen vielfältig zum Einsatz. Insbesondere werden solche Anordnungen in der Fluidsensorik verwendet, um beispielsweise den Füllstand eines Fluids in einem Behälter qualitativ oder quantitativ zu ermitteln.

Die DE 195 38 678 A1 beschreibt eine Anordnung zur Überwachung eines vorbestimmten Füllstands einer Flüssigkeit in einem Behälter mit einem Ultraschallwandler, der an einer auf der Höhe des zu überwachenden Füllstands liegenden Messstelle an der Außenseite der Behälterwand montiert ist. Der Ultraschallwandler enthält ein piezoelektrisches Element, das bei Erregung durch einen Wechselspannungsimpuls mit einer vorgegebenen Sendefrequenz einen Ultraschall-Sendeimpuls erzeugt, der über eine Membran auf die Behälterwand übertragen wird, und das Ultraschallschwingungen, die von der Behälterwand auf den Ultraschallwandler übertragen werden, in elektrische Empfangssignale umwandelt.

Weitere artverwandte Anordnungen sind aus DE 301 74 65 A1 und US 2005/072 226 A1 bekannt.

Aufgabe der vorliegenden Erfindung ist es, eine Anordnung und ein Verfahren zum Feststellen eines Mindestfüllstands eines Fluids in einem Fluidbehälter bereitzustellen, mit denen der Mindestfüllstand qualitativ festgestellt und überwacht werden kann.

Diese Aufgabe wird mit einer Anordnung mit den Merkmalen des unabhängigen Anspruchs 1 und einem Verfahren mit den Merkmalen des unabhängigen Anspruchs 9 gelöst. Bevorzugte und Vorteilhafte Ausgestaltungen sind in den Unteransprüchen angegeben.

Der vorliegenden Erfindung liegt im Wesentlichen der Gedanke zu Grunde, einen Ultraschallwandler an einer Außenwand eines Fluidbehälters in einer vorgegebenen Höhe anzubringen und gleichzeitig innerhalb des Fluidbehälters ein Reflexionselement vorzusehen, dass dazu ausgebildet ist, die vom Ultraschallwandler ausgesendeten Ultraschallsignale wieder zurück zum Ultraschallwandler zu reflektieren. Befindet sich der Füllstand des Fluids oberhalb von sowohl dem Reflexionsreflektor als auch dem Ultraschallwandler, werden die Ultraschallsignale vom Ultraschallwandler durch die Seitenwand in das Fluid eingekoppelt und können bis zum Reflexionsreflektor gelangen, bevor sie von diesem zurück zum Ultraschallwandler reflektiert und dort als reflektierte Ultraschallsignale empfangen werden. Wird vom Ultraschallwandler ein vom Reflexionsreflektor reflektiertes Ultraschallsignal nach einem vorherigen Aussenden empfangen, kann qualitativ ausgesagt werden, dass der Fluidfüllstand oberhalb von sowohl dem Reflexionsreflektor als auch dem Ultraschallwandler ist und somit ein Mindestvorfüllstand des Fluids innerhalb des Behälters vorliegt. Wenn jedoch der Füllstand unterhalb des Ultraschallwandlers liegt, gelangen die vom Ultraschallwandler ausgesendeten Ultraschallsignale nicht mehr bis zum Reflexionselement. Vielmehr werden die Ultraschallsignale an der Grenzfläche zwischen dem nicht mit Fluid gefüllten Innenraumbereich des Fluidbehälters und der Innenwandung des Fluidbehälters reflektiert und gelangen wieder zurück zum Ultraschallwandler. Das heißt, dass die Ultraschallwallen zwar in die Seitenwand eingekoppelt werden, jedoch nicht aus der Wand in den nicht gefüllten Innenraum des Fluidbehälters austreten, sondern an dieser Grenzfläche reflektiert werden. Somit empfängt der Ultraschallwandler ein Ultraschallsignal, das von der Innenwand des Fluidbehälters reflektiert wurde, womit qualitativ ausgesagt werden kann, dass sich der Fluidfüllstand unterhalb des Schallwandlers bzw. unterhalb des Reflexionselements befindet und somit der Mindestfüllstand unterschritten ist. Folglich ist gemäß einem ersten Aspekt der vorliegenden Erfindung eine Anordnung zum Feststellen eines Mindestfüllstands eines Fluids offenbart, die einen Fluidbehälter aufweist, in dem das Fluid aufgenommen ist. Der Fluidbehälter umfasst einen ersten Seitenwandabschnitt, einen dem ersten Seitenwandabschnitt gegenüberliegenden zweiten Seitenwandabschnitt und einen mit dem ersten Seitenwandabschnitt und dem zweiten Seitenwandabschnitt verbundenen Fluidbehälterboden. Die erfindungsgemäße Anordnung weist ferner einen an einer Außenseite des ersten Seitenwandabschnitts unter einem vorbestimmten Abstand zum Fluidbehälterboden angebrachten Ultraschallwandler, der dazu ausgebildet ist, ein Ultraschallschallsignal durch den ersten Seitenwandabschnitt ins Innere des Fluidbehälters auszusenden, ein im Inneren des Fluidbehälters zwischen dem ersten Seitenwandabschnitt und dem zweiten Seitenwandabschnitt angeordnetes Reflexionselement, das dazu ausgebildet ist, das vom Ultraschallwandler ausgesendete Ultraschallsignal zurück zum Ultraschallwandler zu reflektieren, und eine Steuervorrichtung zum Ansteuern des Ultraschallwandlers auf, die dazu ausgebildet ist, einen Fluidfüllstand größer als oder gleich dem Mindestfüllstand festzustellen, wenn das vom Ultraschallwandler empfangene Ultraschallsignal ein vom Reflexionselement reflektiertes Ultraschallsignal ist, und einen Füllstand kleiner als der Mindestfüllstand festzustellen, wenn vom Ultraschallwandler kein Ultraschallsignal empfangen wird oder das vom Ultraschallwandler empfangene Ultraschallsignal ein von der Innenwand des ersten Seitenwandabschnitts reflektiertes Ultraschallsignal ist.

Die erfindungsgemäße Anordnung stellt somit eine Art Füllstandschalter bereit. Solange das Reflexionselement ein vom Ultraschallwandler ausgesendetes Ultraschallsignal reflektiert, liegt der Mindestfüllstand des Fluids innerhalb des Fluidbehälters vor. Sobald das Reflexionselement kein vom Ultraschallwandler ausgesendetes Ultraschallsignal reflektiert, ist der tatsächliche Fluidfüllstand kleiner als der Mindestfüllstand des Fluids innerhalb des Fluidbehälters und es kann eine Warnung ausgegeben werden. Mit der erfindungsgemäßen Anordnung kann der Fluidfüllstand also qualitativ ermittelt werden.

Bevorzugt ist der Mindestfüllstand gleich dem vorbestimmten Abstand zwischen dem Ultraschallwandler und dem Fluidbehälterboden. Damit kann durch entsprechendes Anbringen des Ultraschallwandlers an dem ersten Seitenwandabschnitt des Fluidbehälters der zu überwachende Mindestfüllstand wie gewünscht eingestellt werden.

In einer bevorzugten Ausgestaltung der erfindungsgemäßen Anordnung ist das Reflexionselement ebenfalls unter dem vorbestimmten Abstand zum Fluidbehälterboden angeordnet. In einer derartigen Ausgestaltung ist es bevorzugt, dass der Ultraschallwandler ein im Wesentlichen waagrechtes Ultraschallsignal zum Reflexionselement aussendet und auch wieder empfängt.

In einer vorteilhaften Ausgestaltung weist das Reflexionselement einen im Wesentlichen stabförmigen Reflexionsabschnitt auf, der sich im Wesentlichen parallel zum Fluidbehälterboden und im Wesentlichen senkrecht zum Ultraschallsignal erstreckt.

Vorzugsweise ist das Reflexionselement an einem den ersten Seitenwandabschnitt mit dem zweiten Seitenwandabschnitt verbindenden dritten Seitenwandabschnitt des Fluidbehälters befestigt.

Zudem kann es bevorzugt sein, dass das Reflexionselement ferner zumindest einen Befestigungsabschnitt aufweist, mit dem der Reflexionsabschnitt verbunden ist und mittels dem das Reflexionselement am ersten Seitenwandabschnitt befestigt ist.

In einer weiteren bevorzugten Ausgestaltung der erfindungsgemäßen Anordnung ist die Steuervorrichtung ferner dazu ausgebildet, eine Laufzeit des Ultraschallsignals zwischen dem Aussenden des Ultraschallsignals und dem Empfangen des reflektierten Ultraschallsignals zu ermitteln. Ein am Reflexionselement reflektiertes Ultraschallsignal wird dann erkannt, wenn die ermittelte Laufzeit größer als oder gleich einer vorbestimmten Schwellenlaufzeit ist, wohingegen ein an der Innenwand des ersten Seitenwandabschnitts reflektiertes Ultraschallsignal dann erkannt wird, wenn die ermittelte Laufzeit kleiner als die vorbestimmte Schwellenlaufzeit ist.

Mit Hilfe der Auswertung der Laufzeit des vom Ultraschallwandler ausgesendeten Ultraschallsignals kann folglich also unterschieden werden, ob es sich um eine Reflexion am Reflexionselement oder an der Innenwand des ersten Seitenwandabschnitts des Fluidbehälters handelt, weshalb es ermöglicht ist, den Fluidfüllstand qualitativ in Bezug auf den Mindestfüllstand zu ermitteln, d. h. ob der Fluidfüllstand größer als oder gleich dem Mindestfüllstand oder kleiner als der Mindestfüllstand ist.

Das Vorsehen des Reflexionselements innerhalb des Fluidbehälters kann das Ansprechverhalten des Ultraschallwandlers speziell unter dynamischen Bedingungen verbessern. Zudem können bei der Verwendung des Reflexionselements zwischen diesem und dem ersten Seitenwandabschnitt des Fluidbehälters gegenüberliegenden zweiten Seitenwandabschnitt weitere Strukturen, wie zum Beispiel Schwallwände oder andere Beruhigungsstrukturen, angeordnet werden, ohne die Funktionalität der erfindungsgemäßen Anordnung zur Füllstandüberwachung zu beeinträchtigen. Zudem kann die Gestaltung des zweiten Seitenwandabschnitts des Fluidbehälters unabhängig von der Messfunktion der erfindungsgemäßen Anordnung ausgestaltet sein.

Ferner kann es vorteilhaft sein, dass das Reflexionselement unter einem vorbestimmten Schallabstand zum ersten Seitenwandabschnitt angeordnet ist. Vorzugsweise beträgt der vorbestimmte Schallabstand ungefähr 5 % bis ungefähr 70 % des Abstands zwischen dem ersten Seitenwandabschnitt und dem zweiten Seitenwandabschnitt. Besonders bevorzugt ist der Schallabstand nur unwesentlich größer als der zur Erkennung des reflektierten Ultraschallsignals notwendige Mindestabstand zum Ultraschallwandler. Dieser Mindestabstand ist prinzipbedingt bei Echolaufzeitmessungen vorhanden und in seiner Größe von der spezifischen technischen Ausführung der Messanordnung abhängig.

Gemäß einem weiteren Aspekt der vorliegenden Erfindung ist ein Verfahren zum Feststellen eines Mindestfüllstands eines Fluids in einem Fluidbehälter offenbart, in dem das Fluid aufgenommen ist. Der Fluidbehälter weist einen ersten Seitenwandabschnitt, einen dem ersten Seitenwandabschnitt gegenüberliegenden zweiten Seitenwandabschnitt und einen mit dem ersten Seitenwandabschnitt und dem zweiten Seitenwandabschnitt verbundenen Fluidbehälterboden auf. An einer Außenseite des ersten Seitenwandabschnitts ist unter einem vorbestimmten Abstand zum Fluidbehälterboden ein Ultraschallwandler angeordnet, der dazu ausgebildet ist, ein Ultraschallsignal durch den ersten Seitenwandabschnitt hindurch ins Innere des Fluidbehälters auszusenden. Im Inneren des Fluidbehälters ist zwischen dem ersten Seitenwandabschnitt und dem zweiten Seitenwandabschnitt ein Reflexionselement angeordnet, das dazu ausgebildet ist, das vom Ultraschallwandler ausgesendete Ultraschallsignal zurück zum Ultraschallwandler zu reflektieren. Das erfindungsgemäße Verfahren umfasst ein Ansteuern des Ultraschallwandlers zum Aussenden eines Ultraschallsignals in das Innere des Fluidbehälters, ein Empfangen eines reflektierten Ultraschallsignals mittels dem Ultraschallwandler und ein Feststellen eines Fluidfüllstands größer als oder gleich dem Mindestfüllstand, wenn das vom Ultraschallwandler empfangene Ultraschallsignal ein vom Reflexionselement reflektiertes Ultraschallsignal ist, oder ein Feststellen eines Fluidfüllstands kleiner als der Mindestfüllstand, wenn vom Ultraschallwandler kein Ultraschallsignal empfangen wird oder das vom Ultraschallwandler empfangene Ultraschallsignal ein von der Innenwand des ersten Seitenwandabschnitts reflektiertes Ultraschallsignal ist.

In einer bevorzugten Ausgestaltung umfasst das erfindungsgemäße Verfahren ferner ein Ermitteln einer Laufzeit des Ultraschallsignals zwischen dem Aussenden des Ultraschallsignals und dem Empfangen des reflektierten Ultraschallsignals. Dabei wird ein am Reflexionselement reflektiertes Ultraschallsignal erkannt, wenn die ermittelte Laufzeit größer als oder gleich einer vorbestimmten Schwellenlaufzeit ist, und es wird ein an der Innenwand des ersten Seitenwandabschnitts reflektiertes Ultraschallsignal erkannt, wenn die ermittelte Laufzeit kleiner als die vorbestimmte Schwellenlaufzeit ist.

Weitere Aufgaben und Merkmale der vorliegenden Erfindung werden dem Fachmann durch Ausüben der vorliegenden Lehre und Betrachten der beiliegenden Zeichnungen ersichtlich, in denen:
- Fig. 1: eine schematische Ansicht einer beispielhaften Ausgestaltung einer erfindungsgemäßen Anordnung zum Feststellen eines Mindestfüllstands eines Fluids in einem Fluidbehälter darstellt,
- Fig. 2: eine schematische Ansicht einer weiteren beispielhaften Ausgestaltung einer erfindungsgemäßen Anordnung zum Feststellen eines Mindestfüllstands eines Fluids in einem Fluidbehälter darstellt,
- Fig. 3: eine Draufsicht auf eine weitere beispielhafte Ausgestaltung einer erfindungsgemäßen Anordnung zum Feststellen eines Mindestfüllstands eines Fluids in einem Fluidbehälter darstellt,
- Fig. 4: eine Draufsicht auf eine weitere beispielhafte Ausgestaltung einer erfindungsgemäßen Anordnung zum Feststellen eines Mindestfüllstands eines Fluids in einem Fluidbehälter darstellt,
- Fig. 5: eine Draufsicht auf eine weitere beispielhafte Ausgestaltung einer erfindungsgemäßen Anordnung zum Feststellen eines Mindestfüllstands eines Fluids in einem Fluidbehälter darstellt, und
- Fig. 6: ein beispielhaftes Ablaufdiagramm eines erfindungsgemäßen Verfahrens zum Feststellen eines Mindestfüllstands eines Fluids in einem Fluidbehälter darstellt.

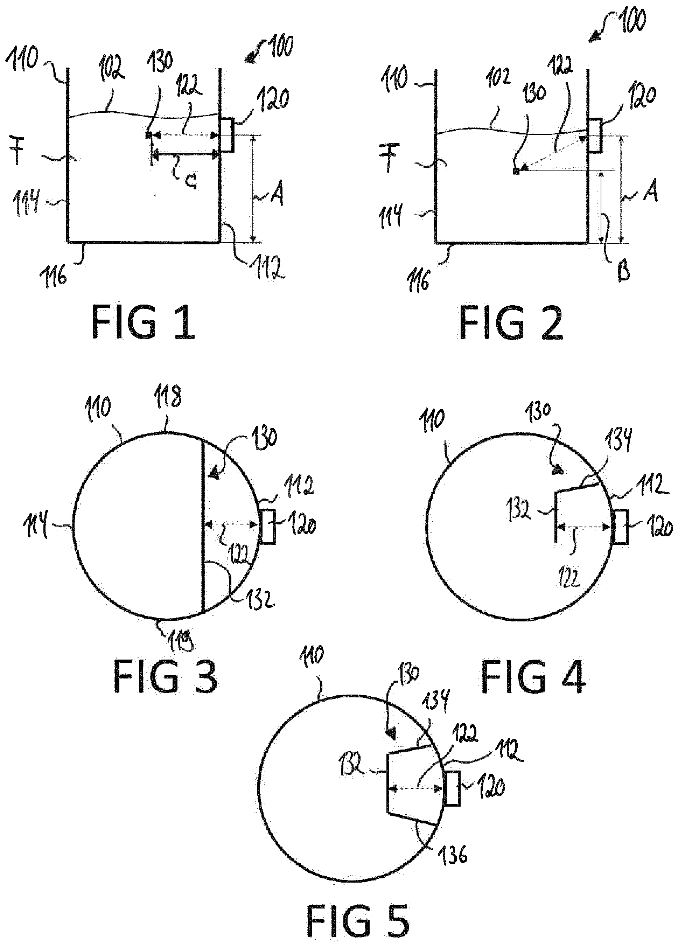

Die Fig. 1 zeigt eine beispielhafte Ausgestaltung einer erfindungsgemäßen Anordnung 100 mit einem Fluidbehälter 110 und einem darin befindlichen Fluid F. Bei dem Fluid F handelt es sich beispielsweise um ein flüssiges Medium zur Schadstoffreduktion in Abgasen, das vorzugsweise ein Reduktionsmittel und/oder einen Reduktionsmittelvorläufer, beispielsweise eine wässrige Harnstofflösung, aufweist. Alternativ kann es sich bei dem Fluid F um ein Öl handeln, wie beispielsweise ein Getriebeöl für ein Getriebe eines Fahrzeugs. Außerdem kann das Fluid F ein Motoröl oder ein Kraftstoff sein. Ebenso kann die Anordnung 100 für Wasser oder wässrige Lösungen verwendet werden, die beispielsweise zur Scheibenreinigung gedacht sind oder als Reaktionsprodukt beim Betrieb einer Brennstoffzelle entstehen.

Der Fluidbehälter 110 weist einen ersten Seitenwandabschnitt 112, einen dem ersten Seitenwandabschnitt 112 gegenüberliegenden zweiten Seitenwandabschnitt 114 und einen mit dem ersten Seitenwandabschnitt 112 und dem zweiten Seitenwandabschnitt 114 verbundenen Fluidbehälterboden 116 auf. Im Fluidbehälter 110 der Fig. 1 weist das Fluid F einen Fluidfüllstand 102 auf. Die Anordnung 100 der Fig. 1 umfasst ferner einen an einer Außenseite des ersten Seitenwandabschnitts 112 unter einem vorbestimmten Abstand A zum Fluidbehälterboden 116 angebrachten Ultraschallwandler 120, der dazu ausgebildet ist, ein Ultraschallsignal durch den ersten Seitenwandabschnitt 112 hindurch ins Innere des Fluidbehälters 110 auszusenden. Der vorbestimmte Abstand A kann dabei auch gleichzeitig den Mindestfüllstand, der mit der erfindungsgemäßen Anordnung 100 überwacht werden soll, darstellen und kann wie gewünscht eingestellt werden.

Der Ultraschallwandler 120 enthält beispielsweise ein piezoelektrisches Element, das bei Erregung durch einen Wechselspannungsimpuls mit einer vorgegebenen Sendefrequenz einen Ultraschall-Sendeimpuls (= Ultraschallsignal) erzeugt, der auf den ersten Seitenwandabschnitt 112 übertragen wird, und das Ultraschallschwingungen, die von dem ersten Seitenwandabschnitt 112 auf den Ultraschallwandler 120 übertragen werden, in elektrische Empfangssignale umwandelt. Somit kann der Ultraschallwandler 120 als Sender und Empfänger von Ultraschallsignalen fungieren. Anstatt eines piezoelektrischen Elements können auch Ultraschallwandler anderer Bauart verwendet werden.

Die Anordnung 100 weist zudem ein im Inneren des Fluidbehälters 110 angeordnetes Reflexionselement 130 auf, das, in der Ausgestaltung der Fig. 1, ebenfalls unter den vorbestimmten Abstand A vom Fluidbehälterboden 116 beabstandet ist. Das Reflexionselement 130 ist dazu ausgebildet, die vom Ultraschallwandler 120 ins Fluid F ausgesendeten Ultraschallsignale wieder zum Ultraschallwandler 120 zurück zu reflektieren. Das Reflexionselement 130 kann einen rechteckigen, quadratischen, kreisförmigen, ovalen oder jeglichen anderen geeigneten Querschnitt aufweisen, der dazu ausgebildet ist, Ultraschallsignale wieder zurück zu reflektieren. Vorzugsweise weist das Reflexionselement 130 einen ebenen Abschnitt auf, der die darauf auftreffenden Ultraschallsignale reflektieren kann.

Gemäß der Ausgestaltung nach Fig. 1 sendet der Ultraschallwandler 120 im Wesentlichen in waagrechter Richtung Ultraschallsignale ins Innere des Fluidbehälters 110 aus. Dabei ist es insbesondere bevorzugt, dass der Ultraschallwandler 120 im Wesentlichen senkrecht zum Seitenwandabschnitt 112 verlaufende Ultraschallsignale aussendet.

Die Anordnung 110 weist ferner eine in den Figuren nicht explizit dargestellte Steuervorrichtung auf, die dazu ausgebildet ist, den Ultraschallwandler 120 anzusteuern und jegliche Signale des Ultraschallwandlers 120 auszuwerten. Insbesondere ist die Steuervorrichtung dazu ausgebildet, festzustellen, ob eine Reflexion des vom Ultraschallwandler 120 ausgesendeten Ultraschallsignals am Reflexionselement 130 oder an der Innenwand des ersten Seitenwandabschnitts 112 vorliegt. Befindet sich der Fluidüllstand 102, wie in der Fig. 1 gezeigt, oberhalb von sowohl dem Ultraschallwandler 120 als auch dem Reflexionselement 130, können die vom Ultraschallwandler 120 ausgesendeten Ultraschallsignale durch den ersten Seitenwandabschnitt 112 hindurch gelangen und in das Fluid F eingekoppelt werden, wo sie von dort aus durch das Fluid F bis zum Reflexionselement 130 transmittieren können. Am Reflexionselement 130 werden die Ultraschallsignale reflektiert und gelangen wieder durch das Fluid F und den Seitenwandabschnitt 112 zurück zum Ultraschallwandler 120, wo sie als reflektiertes Ultraschallsignal vom Ultraschallwandler 120 detektiert werden. In den Figuren ist der Pfad des Ultraschallsignals als Pfeil 122 gekennzeichnet.

Befindet sich jedoch der Fluidfüllstand 102 unterhalb von sowohl dem Reflexionselement 130 als auch dem Ultraschallwandler 120, werden die vom Ultraschallwandler 120 ausgesendeten Ultraschallsignale bereits an der Grenzfläche zwischen der Innenwand des ersten Seitenwandabschnitts 112 und dem an dieser Messstelle nicht befüllten Inneren des Fluidbehälters 110 reflektiert und gelangen von dort aus wieder zurück zum Ultraschallwandler 120, wo sie wiederum als reflektiertes Ultraschallsignal vom Ultraschallwandler 120 detektiert werden.

Auch wenn aufgrund von äußeren Einflüssen (z. B. Bewegung oder Neigung des Fluidbehälters 110) nur ein Teil der Strecke zwischen Ultraschallwandler 120 und Reflexionselement 130 mit dem Fluid gefüllt ist, kann sich kein Ultraschallsignal des Ultraschallwandlers 120 zum Reflexionselement 130 und wieder zurück ausbreiten.

Die Steuervorrichtung kann nun beispielsweise anhand einer Auswertung der Laufzeit des Ultraschallsignals feststellen, ob es sich um eine Reflexion am Reflexionselement 130 oder um eine Reflexion an der Innenwand des ersten Seitenwandabschnitts 112 handelt und daraus den Schluss ziehen, ob der Fluidfüllstand 102 größer als/gleich oder kleiner dem Mindestfüllstand ist. Wenn das vom Ultraschallwandler 120 empfangene Ultraschallsignal 122 ein vom Reflexionselement 130 reflektiertes Ultraschallsignal ist, wird ein Fluidfüllstand 102 größer als oder gleich dem Mindestfüllstand A festgestellt. Im Gegensatz dazu wird ein Fluidfüllstand kleiner als der Mindestfüllstand festgestellt, wenn das vom Ultraschallwandler 120 empfangene Ultraschallsignal 122 ein von der Innenwand des ersten Seitenwandabschnitts 112 reflektiertes Ultraschallsignal ist.

Das Reflexionselement 130 ist ferner unter einem vorbestimmten Schallabstand C zum ersten Seitenwandabschnitt 112 angeordnet. Der vorbestimmte Schallabstand C beträgt ungefähr 5 % bis ungefähr 70 % des Abstands zwischen dem ersten Seitenwandabschnitt 112 und dem zweiten Seitenwandabschnitt 114 beträgt. Besonders bevorzugt ist der Schallabstand nur unwesentlich größer als der zur Erkennung des reflektierten Ultraschallsignals notwendige Mindestabstand zum Ultraschallwandler 120.

Unter Verweis auf die Fig. 2 ist eine weitere beispielhafte Ausgestaltung einer erfindungsgemäßen Anordnung 100 zum Feststellen eines Mindestfüllstands eines Fluid F in einem Fluidbehälter 110 dargestellt. Die Anordnung 100 der Fig. 2 unterscheidet sich von der Anordnung 100 der Fig. 1 darin, dass das Reflexionselement 130 einen vorbestimmten Abstand B zum Fluidbehälterboden 116 aufweist, der kleiner ist als der vorbestimmte Abstand A des Ultraschallwandlers 120 zum Fluidbehälterboden 116. Zudem sendet der Ultraschallwandler 120 Ultraschallsignale nicht senkrecht zur Innenwand des ersten Seitenwandabschnitts 112, sondern Ultraschallsignale, die unter einem vorbestimmten Winkel zur Innenwand des ersten Seitenwandabschnitts 112 verlaufen.

Auch hier kann Steuervorrichtung die Auswertung der Reflexionssignale wie bereits im Hinblick auf die Fig. 1 beschrieben ausführen, wobei eine Reflexion am Reflexionselement 130 nur dann ermöglicht ist, wenn der Füllstand 102 oberhalb des Ultraschallwandlers 120 liegt, beziehungsweise die gesamte Strecke zwischen Ultraschallwandler 120 und Reflexionselement 130 mit dem Fluid gefüllt ist.

Die Anordnung gemäß Fig. 2 ist beispielsweise dann vorteilhaft, wenn der Fluidbehälter im Betrieb häufig oder dauerhaft eine geneigte Lage aufweist, so dass die Fluidoberfläche häufig oder dauerhaft parallel zum Pfad 122 des Ultraschallsignals verläuft.

Eine weitere, in den Zeichnungen nicht explizit dargestellte Ausgestaltung einer erfindungsgemäßen Anordnung 100 kann sich dadurch begründen, dass das Reflexionselement 130 unter einem vorbestimmten Abstand zum Fluidbehälterboden 116 angeordnet ist, der größer ist als der vorbestimmte Abstand A des Ultraschallwandlers 120 zum Fluidbehälterboden 116. In einer derartigen Ausgestaltung kann eine Reflexion am Reflexionselement 130 nur dann erfolgen, wenn der Füllstand 102 oberhalb des Reflexionselements 130 liegt beziehungsweise die gesamte Strecke zwischen Ultraschallwandler 120 und Reflexionselement 130 mit dem Fluid gefüllt ist.

Unter Verweis auf die Fig. 3 bis Fig. 5 sind jeweils Draufsichten auf den Fluidbehälter 110 der Fig. 1 dargestellt, wobei sich die Fig. 3 bis 5 darin unterscheiden, dass das Reflexionselement 130 jeweils unterschiedliche Ausgestaltungen und Befestigungen hat.

In der Fig. 3 ist gezeigt, dass das Reflexionselement 130 einen im Wesentlichen stabförmigen Reflexionsabschnitt 132 aufweist, der sich im Wesentlichen parallel zum Fluidbehälterboden 116 und im Wesentlichen senkrecht zum Ultraschallsignal 122 erstreckt. Insbesondere erstreckt sich das Reflexionselement 130 der Fig. 3 von einem den ersten Seitenwandabschnitt 112 mit dem zweiten Seitenwandabschnitt 114 verbindenden dritten Seitenwandabschnitt 118 bis zu einem gegenüberliegenden vierten Seitenwandabschnitt 119 des Fluidbehälters 110.

Das Reflexionselement 130 der Fig. 4 weist einen im Wesentlichen stabförmigen Reflexionsabschnitt 132 sowie einen Befestigungsabschnitt 134 auf, mittels dem das Reflexionselement 130 am ersten Seitenwandabschnitt 112 befestigt ist. Alternativ kann der Befestigungsabschnitt 134 am dritten Seitenwandabschnitt 118 oder am vierten Seitenwandabschnitt 119 befestigt sein. Zudem kann es bevorzugt sein, dass zur Verbesserung der Stabilität des Reflexionselements 130 ein weiterer Befestigungsabschnitt 136 vorgesehen ist, mittels dem das Reflexionselement 130 wiederum am ersten Seitenwandabschnitt 112 angebracht ist (siehe Fig. 5). Auch hier kann der weitere Befestigungsabschnitt 136 alternativ am dritten Seitenwandabschnitt 118 oder am vierten Seitenwandabschnitt 119 befestigt sein.

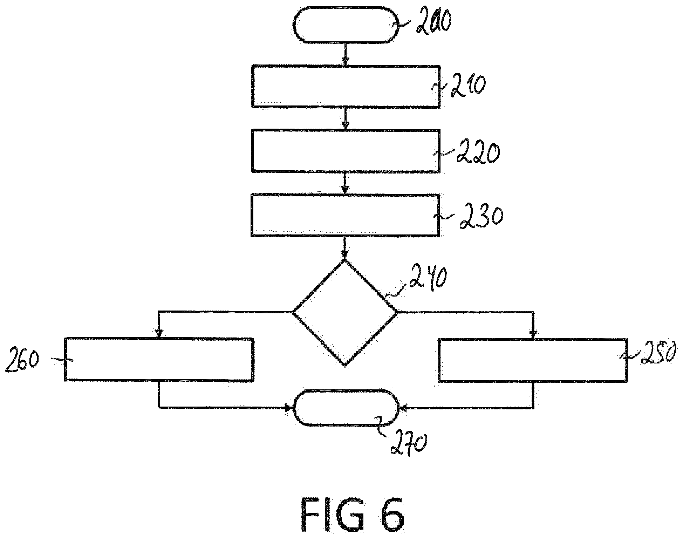

Die Fig. 6 zeigt ein beispielhaftes Ablaufdiagramm eines erfindungsgemäßen Verfahrens zum Feststellen eines Mindestfüllstands eines Fluids in einem Fluidbehälter. Beispielsweise wird darin nunmehr Bezug auf die Fig. 1 genommen und die darin gezeigte Anordnung 100.

Das Verfahren der Fig. 6 startet beim Schritt 200 und gelangt dann zum Schritt 210, an dem die Steuervorrichtung den Ultraschallwandler 120 derart ansteuert, dass dieser ein Ultraschallsignal 122 durch den ersten Seitenwandabschnitt 112 hindurch in Richtung des Reflexionselements 130 aussendet.

In einem darauffolgenden Schritt 220 wird mittels des Ultraschallwandlers 120 ein reflektiertes Ultraschallsignal empfangen. In einem weiteren Schritt 230 ist die Steuervorrichtung dazu ausgebildet, die Laufzeit des Ultraschallsignals zwischen dem beim Schritt 210 ausgesendeten Ultraschallsignal und dem am Schritt 220 empfangenen Ultraschallsignal zu ermitteln.

Daraufhin wird im Schritt 240 überprüft, ob die am Schritt 230 ermittelte Laufzeit des Ultraschallsignals größer ist als ein vorbestimmter Laufzeitschwellenwert. Wird beim Schritt 240 festgestellt, dass die ermittelte Laufzeit größer ist als oder gleich der ermittelte Laufzeitschwelle ist, gelangt das Verfahren zum Schritt 250, an dem festgestellt wird, dass der Füllstand 102 des Fluids F innerhalb des Fluidbehälters 110 größer als oder gleich dem Mindestfüllstand A ist.

Wird hingegen beim Schritt 240 festgestellt, dass die ermittelte Laufzeit des Ultraschallsignals kleiner ist als die vorbestimmte Laufzeitschwelle, gelangt das Verfahren zum Schritt 260, an dem festgestellt wird, dass der Füllstand 102 des Fluids F im Fluidbehälter 110 kleiner ist als der Mindestfüllstand A.

Nach den Schritten 250, 260 gelangt das Verfahren jeweils zum Schritt 270 und wird beendet.

## Patentansprüche

1. Anordnung (100) zum Feststellen eines Mindestfüllstands eines Fluids (F), mit:
- einem Fluidbehälter (110), in dem das Fluid (F) aufgenommen ist, wobei der Fluidbehälter (110) einen ersten Seitenwandabschnitt (112), einen dem ersten Seitenwandabschnitt (112) gegenüberliegenden zweiten Seitenwandabschnitt (114) und einen mit dem ersten Seitenwandabschnitt (112) und dem zweiten Seitenwandabschnitt (114) verbundenen Fluidbehälterboden (116) aufweist,
- einem an einer Außenseite des ersten Seitenwandabschnitts (112) unter einem vorbestimmten Abstand (A) zum Fluidbehälterboden (116) angebrachten Ultraschallwandler (120), der dazu ausgebildet ist, ein Ultraschallsignal (122) durch den ersten Seitenwandabschnitt (112) ins Innere des Fluidbehälters (110) auszusenden,
- einem im Inneren des Fluidbehälters (110) zwischen dem ersten Seitenwandabschnitt (112) und dem zweiten Seitenwandabschnitt (114) angeordneten Reflexionselement (130), das dazu ausgebildet ist, das vom Ultraschallwandler (120) ausgesendete Ultraschallsignal (122) zurück zum Ultraschallwandler (120) zu reflektieren, und
- einer Steuervorrichtung zum Ansteuern des Ultraschallwandlers (120), wobei die Steuervorrichtung dazu ausgebildet ist, einen Fluidfüllstand (102) größer als oder gleich dem Mindestfüllstand festzustellen, wenn das vom Ultraschallwandler (120) empfangene Ultraschallsignal (122) ein vom Reflexionselement (130) reflektiertes Ultraschallsignal (122) ist, und einen Fluidfüllstand kleiner als der Mindestfüllstand festzustellen, wenn der Ultraschallwandler (120) kein Ultraschallsignal empfängt oder das vom Ultraschallwandler (120) empfangene Ultraschallsignal (122) ein von der Innenwand des ersten Seitenwandabschnitts (112) reflektiertes Ultraschallsignal (122) ist.

2. Anordnung (100) nach Anspruch 1, wobei der Mindestfüllstand gleich dem vorbestimmten Abstand (A) zwischen dem Ultraschallwandler (120) und dem Fluidbehälterboden (116) ist.

3. Anordnung (100) nach einem der vorhergehenden Ansprüche, wobei das Reflexionselement (130) unter dem vorbestimmten Abstand (B) zum Fluidbehälterboden (116) angeordnet ist.

4. Anordnung (100) nach einem der vorhergehenden Ansprüche, wobei das Reflexionselement (130) einen im Wesentlichen stabförmigen Reflexionsabschnitt (132) aufweist, der sich im Wesentlichen parallel zum Fluidbehälterboden (116) und im Wesentlichen senkrecht zum Ultraschallsignal (122) erstreckt.

5. Anordnung (100) nach einem der vorhergehenden Ansprüche, wobei das Reflexionselement (130) an einem den ersten Seitenwandabschnitt (112) mit dem zweiten Seitenwandabschnitt (114) verbindenden dritten Seitenwandabschnitt (118) des Fluidbehälters (110) befestigt ist.

6. Anordnung (100) nach einem der vorhergehenden Ansprüche, wobei das Reflexionselement (130) ferner zumindest einen Befestigungsabschnitt (134) aufweist, wobei das Reflexionselement (130) mittels dem zumindest einen Befestigungsabschnitt (134) am ersten Seitenwandabschnitt (112) befestigt ist.

7. Anordnung (100) nach einem der vorhergehenden Ansprüche, wobei die Steuervorrichtung dazu ausgebildet ist, eine Laufzeit des Ultraschallsignals (122) zwischen einem Aussenden des Ultraschallsignals und einem Empfangen eines reflektieren Ultraschallsignals (122) zu ermitteln, wobei ein am Reflexionselement (130) reflektiertes Ultraschallsignal (122) erkannt wird, wenn die ermittelte Laufzeit größer als oder gleich einer vorbestimmen Schwellenlaufzeit ist, wobei ein an der Innenwand des ersten Seitenwandabschnitts (112) reflektiertes Ultraschallsignal (122) erkannt wird, wenn die ermittelte Laufzeit kleiner als die vorbestimme Schwellenlaufzeit ist.

8. Anordnung (100) nach einem der vorhergehenden Ansprüche, wobei das Reflexionselement (130) unter einem vorbestimmten Schallabstand (C) zum ersten Seitenwandabschnitt (112) angeordnet ist, wobei der vorbestimmte Schallabstand (C) ungefähr 5 % bis ungefähr 70 % des Abstands zwischen dem ersten Seitenwandabschnitt (112) und dem zweiten Seitenwandabschnitt (114) beträgt.

9. Verfahren zum Feststellen eines Mindestfüllstands eines Fluids (F) in einem Fluidbehälter (110), in dem das Fluid (F) aufgenommen ist, wobei der Fluidbehälter (110) einen ersten Seitenwandabschnitt (112), einen dem ersten Seitenwandabschnitt (112) gegenüberliegenden zweiten Seitenwandabschnitt (114) und einen mit dem ersten Seitenwandabschnitt (112) und dem zweiten Seitenwandabschnitt (114) verbundenen Fluidbehälterboden (116) aufweist, wobei an einer Außenseite des ersten Seitenwandabschnitts (112) unter einem vorbestimmten Abstand (A) zum Fluidbehälterboden (116) ein Ultraschallwandler (120) angeordnet ist, der dazu ausgebildet ist, ein Ultraschallsignal (122) durch den ersten Seitenwandabschnitt (112) ins Innere des Fluidbehälters (110) auszusenden, wobei im Inneren des Fluidbehälters (110) zwischen dem ersten Seitenwandabschnitt (112) und dem zweiten Seitenwandabschnitt (114) ein Reflexionselement (130) angeordnet ist, das dazu ausgebildet ist, das vom Ultraschallwandler (120) ausgesendete Ultraschallsignal (122) zurück zum Ultraschallwandler (120) zu reflektieren, wobei das Verfahren aufweist:
- Ansteuern des Ultraschallwandlers (120) zum Aussenden eines Ultraschallsignals (122) ins Innere des Fluidbehälters,
- Empfangen eines reflektierten Ultraschallsignals (122) mit dem Ultraschallwandler (120),
- Feststellen eines Fluidfüllstands größer als oder gleich dem Mindestfüllstand, wenn das vom Ultraschallwandler (120) empfangene Ultraschallsignal (122) ein vom Reflexionselement (130) reflektiertes Ultraschallsignal (122) ist, und
- Feststellen eines Fluidfüllstands kleiner als der Mindestfüllstand, wenn der Ultraschallwandler (120) kein Ultraschallsignal (122) empfängt oder das vom Ultraschallwandler (120) empfangene Ultraschallsignal (122) ein von der Innenwand des ersten Seitenwandabschnitts (112) reflektiertes Ultraschallsignal (122) ist.

10. Verfahren nach Anspruch 9, ferner mit:
- Ermitteln einer Laufzeit des Ultraschallsignals (122) zwischen dem Aussenden des Ultraschallsignals und dem Empfangen eines reflektierten Ultraschallsignals (122),
wobei ein am Reflexionselement (130) reflektiertes Ultraschallsignal (122) erkannt wird, wenn die ermittelte Laufzeit größer als oder gleich einer vorbestimmen Schwellenlaufzeit ist, und
wobei ein an der Innenwand des ersten Seitenwandabschnitts (112) reflektiertes Ultraschallsignal (122) erkannt wird, wenn die ermittelte Laufzeit kleiner als die vorbestimme Schwellenlaufzeit ist.
